# EUROPEAN PATENT SPECIFICATION

(11) **EP 4 200 344 B1**
(45) Date of publication and mention of the grant of the patent: **07.05.2025**
(21) Application number: 21754942.7
(22) Date of filing: 27.07.2021
(51) Int. Cl.: C08F 222/10, C08F 265/06, C09J 4/00, C09J 4/06, C08K 5/3437, C08K 5/00

(54) **CURE ACCELERATORS FOR ANAEROBIC CURABLE COMPOSITIONS**
HÄRTUNGSBESCHLEUNIGER FÜR ANAEROB HÄRTBARE ZUSAMMENSETZUNGEN
ACCÉLÉRATEURS DE DURCISSEMENT POUR COMPOSITIONS DURCISSABLES ANAÉROBIQUES

(30) Priority: 18.08.2020 US 202063066980 P
(43) Date of publication of application: 28.06.2023
(73) Proprietor: Henkel AG & Co. KGaA, 40589 Düsseldorf (DE)
(72) Inventor: DEEGAN, Brian, Dublin D24 YH42 (IE); KNEAFSEY, Brendan, Dublin D24 YH42 (IE); SWEENEY, Nigel, Dublin D24 YH42 (IE); O'DWYER, Patrick, Dublin D24 YH42 (IE); FEARON, Stephen, Dublin D24 YH42 (IE); HABERLIN, Gavin, Dublin D24 YH42 (IE); BIRKETT, David, Dublin D24 YH42 (IE); CONDRON, David, Dublin D24 YH42 (IE); HAMM, Marc, 40589 Dusseldorf (DE); O'BRIEN, Vincent, Dublin D24 YH42 (IE)
(86) International application number: PCT/EP2021/070997
(87) International publication number: WO 2022/037909

(56) References cited:
- WO-A1-2012/046917
- WO-A1-2016/054124
- WO-A1-2019/072686
- US-B1- 6 835 762
- US-B2- 8 362 112

## Description

### BACKGROUND

### Field

The present invention relates to cure accelerators useful for anaerobic curable compositions, such as adhesives and sealants. The cure accelerators may be embraced generally within the structure below 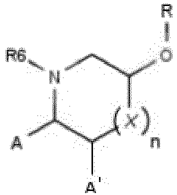 where X is CH₂, O, S or C=O; R is hydrogen or (meth)acryl; and A and A¹ are each individually selected from hydrogen or taken together create a ring structure of 5 to 12 total ring atoms, wherein the ring structure may be cycloaliphatic, cycloheteroaliphatic or aromatic or combinations thereof with or without substitution by one or more hydroxyl or (meth)acryl groups; R⁶ is hydrogen, halogen, amino, carboxyl, nitro, alkyl, alkenyl, alkynyl, hydroxyalkyl, hydroxyalkenyl, hydroxyalkynyl, or alkaryl and n is 0 or 1, provided that when R is hydrogen, A and A' cannot both be hydrogen or taken together cannot be naphthyl.

### Brief Description of Related Technology

Anaerobic adhesive compositions generally are well-known. See e.g. R.D. Rich, "Anaerobic Adhesives" in Handbook of Adhesive Technology, 29, 467-79, A. Pizzi and K.L. Mittal, eds., Marcel Dekker, Inc., New York (1994), and references cited therein. Their uses are legion and new applications continue to be developed.

Conventional anaerobic adhesives ordinarily include a free-radically polymerizable acrylate ester monomer, together with a peroxyl initiator and an inhibitor component. Often, such anaerobic adhesive compositions also contain accelerator components to increase the speed with which the composition cures.

Desirable anaerobic cure-inducing compositions to induce and accelerate cure may ordinarily include one or more of saccharin, toluidines, such as N,N-diethyl-p-toluidine ("DE-p-T") and N,N-dimethyl-o-toluidine ("DM-o-T"), acetyl phenylhydrazine ("APH"), maleic acid.

Saccharin and APH are used as standard cure accelerator components in anaerobic adhesive cure systems. These components however have come under regulatory scrutiny in certain parts of the world, and thus efforts have been undertaken to identify candidates as replacements.

Examples of other curatives for anaerobic adhesives include thiocaprolactam (e.g., U.S. Patent No. 5,411,988) and thioureas [e.g., U.S. Patent No. 3,970,505 (Hauser) (tetramethyl thiourea), German Patent Document Nos. DE 1 817 989 (alkyl thioureas and N,N'-dicyclohexyl thiourea) and 2 806 701 (ethylene thiourea), and Japanese Patent Document No. JP 07-308,757 (acyl, alkyl, alkylidene, alkylene and alkyl thioureas)], certain of the latter of which had been used commercially up until about twenty years ago.

Loctite (R&D) Ltd. discovered a new class of materials -- trithiadiaza pentalenes -- effective as curatives for anaerobic adhesive compositions. The addition of these materials into anaerobic adhesives as a replacement for conventional curatives (such as APH) surprisingly provides at least comparable cure speeds and physical properties for the reaction products formed therefrom. See U.S. Patent No. 6,583,289 (McArdle).

U.S. Patent No. 6,835,762 (Klemarczyk) provides an anaerobic curable composition based on a (meth)acrylate component with an anaerobic cure-inducing composition substantially free of acetyl phenylhydrazine and maleic acid and an anaerobic cure accelerator compound having the linkage - C(=O)-NH-NH- and an organic acid group on the same molecule, provided the anaerobic cure accelerator compound excludes 1-(2-carboxyacryloyl)-2-phenylhydrazine. The anaerobic cure accelerator is embraced by: 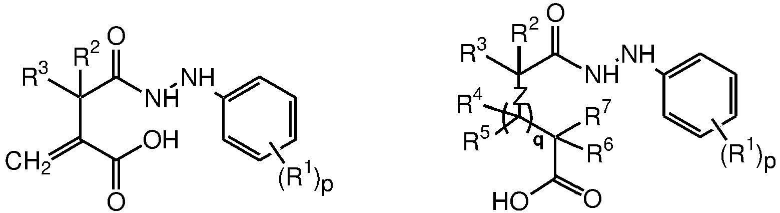 where R¹-R⁷ are each independently selected from hydrogen and C₁₋₄; Z is a carbon-carbon single bond or carbon-carbon double bond; q is 0 or 1; and p is an integer between 1 and 5, examples of which are 3-carboxyacryloyl phenylhydrazine, methyl-3-carboxyacryloyl phenylhydrazine, 3-carboxypropanoyl phenylhydrazine, and methylene-3-carboxypropanoyl phenylhydrazine.

U.S. Patent No. 6,897,277 (Klemarczyk) provides an anaerobic curable composition based on a (meth)acrylate component with an anaerobic cure-inducing composition substantially free of saccharin and an anaerobic cure accelerator compound within the following structure 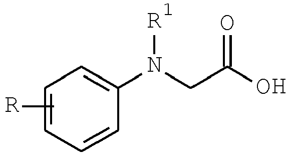 where R is selected from hydrogen, halogen, alkyl, alkenyl, hydroxyalkyl, hydroxyalkenyl, carboxyl, and sulfonate, and R¹ is selected from hydrogen, alkyl, alkenyl, hydroxyalkyl, hydroxyalkenyl, and alkaryl, an example of which is phenyl glycine and N-methyl phenyl glycine.

U.S. Patent No. 6,958,368 (Messana) provides an anaerobic curable composition. This composition is based on a (meth)acrylate component with an anaerobic cure-inducing composition substantially free of saccharin and within the following structure 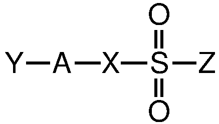 where Y is an aromatic ring, optionally substituted at up to five positions by C₁₋₆ alkyl or alkoxy, or halo groups; A is C=O, S=O or O=S=O; X is NH, O or S and Z is an aromatic ring, optionally substituted at up to five positions by C₁₋₆ alkyl or alkoxy, or halo groups, or Y and Z taken together may join to the same aromatic ring or aromatic ring system, provided that when X is NH, o-benzoic sulfimide is excluded from the structure. Examples of the anaerobic cure accelerator compound embraced by the structure above include 2-sulfobenzoic acid cyclic anhydride, and 3H-1,2-benzodithiol-3-one-1,1-dioxide.

Three Bond Co. Ltd., Tokyo, Japan has in the past described as a component in anaerobic adhesive and sealant compositions a component called tetrahydroquinoline ("THQ").

And more recently U.S. Patent No. 8,362,112 describes a reaction product prepared from reactants comprising: (a) a compound embraced within 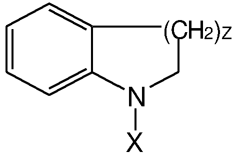 where X is C₁₋₂₀ alkyl, C₂₋₂₀ alkenyl, or C₇₋₂₀ alkaryl, any of which may be interrupted by one or more hereto atoms, and which are functionalized by at least one group selected from -OH, -NH₂ or - SH and z is 1-3 and (b) at least one isocyanate functional material.

U.S. Patent No. 8,481,659 describes an anaerobic curable composition comprising (a) a (meth)acrylate component; (b) an anaerobic cure system; and (c) a reaction product prepared from reactants comprising: (i) at least one compound selected from the group of compounds represented by 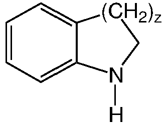 where z is 1-3; and (b) either: (i) at least one compound selected from the group of compounds represented by 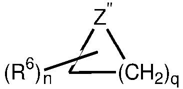 where Z" is selected from -O-, -S-, and -NH-; q is 1 to 4; R⁶ is independently selected from the group consisting of hydroxyalkyl, aminoalkyl, and thioalkyl; and n is at least 1, where the reaction product comprises at least two pendant functional groups independently selected from -OH, -NH₂ and -SH; or (ii) an alkylating agent, alkenylating agent or alkarylating agent.

Recently International Patent Publication No. WO 2019/072686 disclosed an anaerobic curable composition comprising:
(a) a (meth)acrylate component;
(b) an anaerobic cure-inducing composition; and
(c) a cure accelerator embraced by 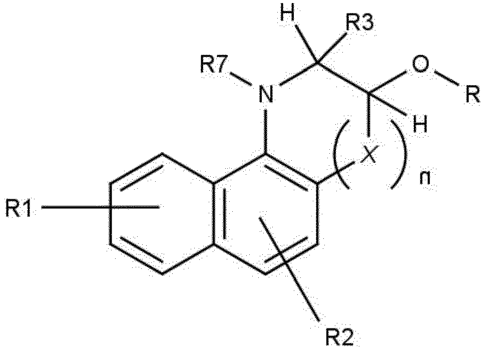
where X is CH₂, O, S, NR⁴, CR⁵R⁶ or C=O; R is one or more of hydrogen, alkyl, alkenyl, alkynyl, hydroxyalkyl, hydroxyalkenyl, or hydroxyalkynyl; R¹ - R⁶ are each individually selected from hydrogen, halogen, amino, carboxyl, nitro, alkyl, alkenyl, alkynyl, hydroxyalkyl, hydroxyalkenyl, hydroxyalkynyl, or alkaryl; R⁷ is hydrogen or CHR⁸R⁹, wherein R⁸ and R⁹ are each individually selected from hydrogen, halogen, amino, carboxyl, nitro, alkyl, alkenyl, alkynyl, hydroxyalkyl, hydroxyalkenyl, hydroxyalkynyl, or alkaryl; and n is 0 or 1.

Notwithstanding the state of the art, there is an ongoing desire to find alternative technologies for anaerobic cure accelerators to differentiate existing products and provide supply assurances in the event of shortages or cessation of supply of raw materials. Moreover, since certain of the raw materials used in conventional anaerobic cure inducing compositions have to one degree or another come under regulatory scrutiny and may be affected by supply chain interruptions, alternative components for anaerobic cure inducing compositions would be desirable. Accordingly, it would be desirable to identify new materials that function as cure components in the cure of anaerobically curable compositions.

### SUMMARY

The present invention relates to cure accelerators useful for anaerobic curable compositions, such as adhesives and sealants.

Generally, the cure accelerators are embraced broadly within the structure below 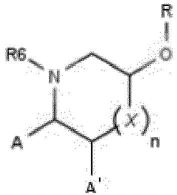 where X is CH₂, O, S or C=O; R is hydrogen or (meth)acryl; and A and A¹ are each individually selected from hydrogen or taken together create a ring structure of 5 to 12 total ring atoms, wherein the ring structure may be cycloaliphatic, cycloheteroaliphatic or aromatic or combinations thereof with or without substitution by one or more hydroxyl or (meth)acryl groups; R⁶ is hydrogen, halogen, amino, carboxyl, nitro, alkyl, alkenyl, alkynyl, hydroxyalkyl, hydroxyalkenyl, hydroxyalkynyl, or alkaryl; and n is 0 or 1, provided that when R is hydrogen, A and A' cannot both be hydrogen or taken together cannot be naphthyl.

Within the genus of structure I are cure accelerators embraced by the generic subgenus represented by: 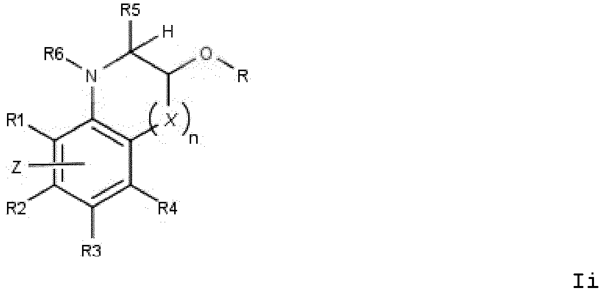 where X is CH₂, O, S or C=O; R is hydrogen or (meth)acryl; R¹ - R⁶ are each individually selected from hydrogen, halogen, amino, carboxyl, nitro, alkyl, alkenyl, alkynyl, hydroxyalkyl, hydroxyalkenyl, hydroxyalkynyl, or alkaryl, or R¹ and R², R² and R³, or R³ and R⁴ taken together form a carbocyclic ring of 5 to 7 ring members, where one or more of the ring members may be O, S or NR¹⁰; R¹⁰ is hydrogen or CHR⁸R⁹, where R⁸ and R⁹ are each individually selected from hydrogen, halogen, amino, carboxyl, nitro, alkyl, alkenyl, alkynyl, hydroxyalkyl, hydroxyalkenyl, hydroxyalkynyl, or alkaryl; Z is optionally present but when present is halogen, amino, carboxyl, nitro, alkyl, alkenyl, alkynyl, hydroxyalkyl, hydroxyalkenyl, hydroxyalkynyl, or alkaryl; and n is 0 or 1.

A series of cure accelerators represented by the subgeneric chemical structures below are useful:

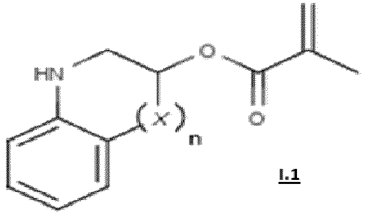

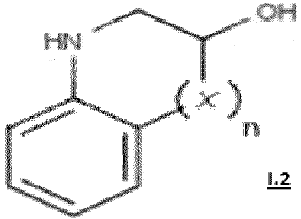

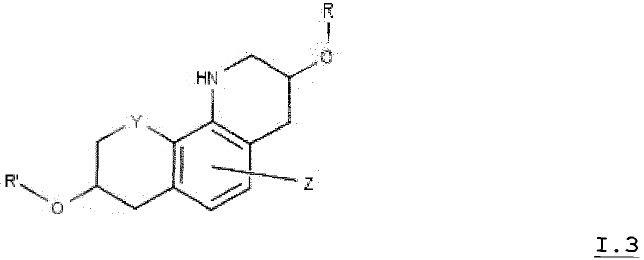

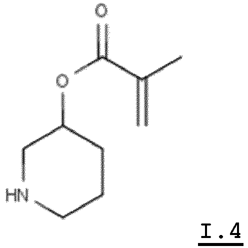

In structures **I.1** - **1.2** each of X and n are as defined above. In structure **I.3**, R and R', and Z are as defined above, and Y is NH.

Alternatively, generally an oligomeric or polymeric version of structure **I** may be used where R is (meth)acryl in structure I to form structure **IA** 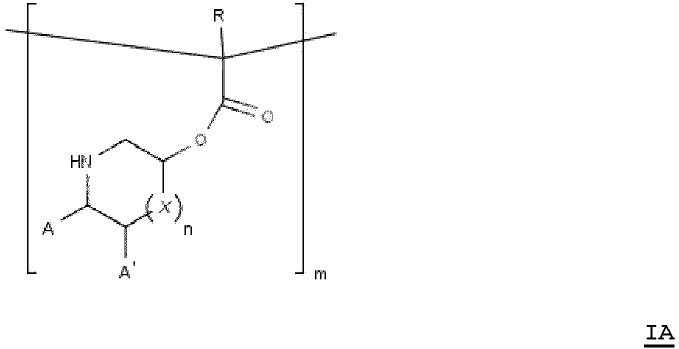 where X; A and A'; R; and n are as defined above, and m is 2 to 10,000, preferably 2 to 5000 and even more preferably 2 to 20.

These, and other cure accelerators disclosed herein, are useful in anaerobic curable compositions that comprise a (meth)acrylate component and an anaerobic cure-inducing component.

### BRIEF DESCRIPTION OF THE FIGURES

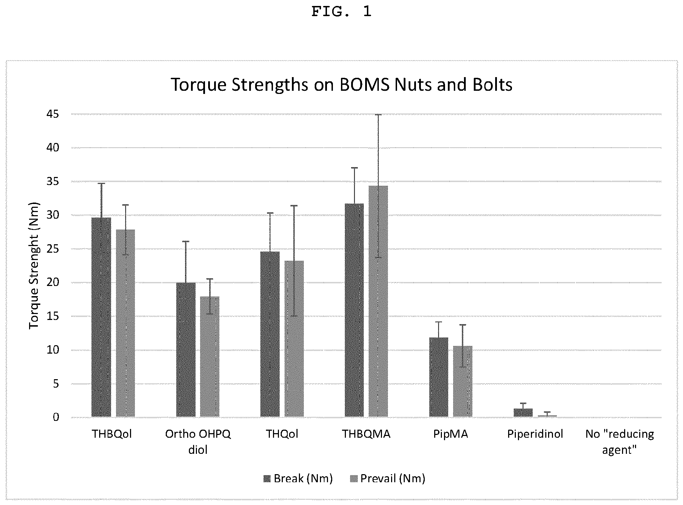

FIG. 1 depicts a plot of 24 hour breakaway and prevail torque of various anaerobic adhesive compositions laid out in Table 2A on M10 nuts and bolts constructed from mild steel/black oxide.

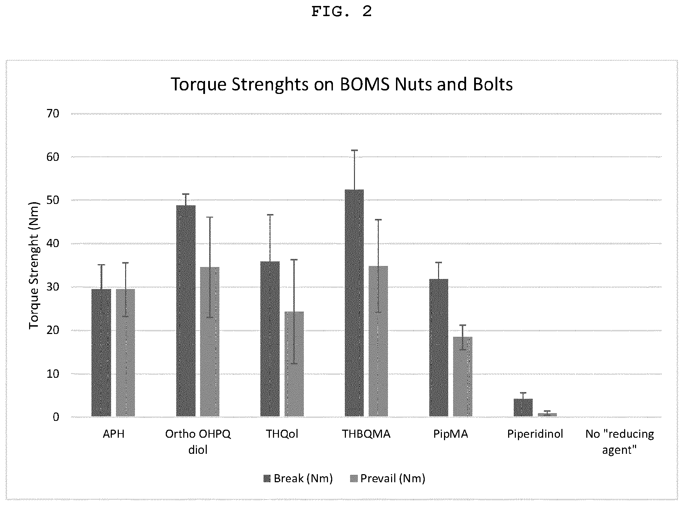

FIG. 2 depicts a plot of 24 hour breakaway and prevail torque of various anaerobic adhesive compositions laid out in Table 2B on M10 nuts and bolts constructed from mild steel/black oxide.

### DETAILED DESCRIPTION

The present invention relates to the addition of cure accelerators into anaerobic curable composition as a replacement for some or all of the amount of conventional anaerobic cure accelerators [such as toluidines, THQ and/or acetyl phenylhydrazine ("APH")] and the surprising observations of at least comparable cure speeds and physical properties for the reaction products formed therefrom, as compared with those observed from conventional anaerobic curable compositions.

(Meth)acrylate monomers suitable for use as the (meth)acrylate component in the present invention may be selected from a wide variety of materials, such as those represented by H₂C=CGCO₂R¹¹, where G may be hydrogen, halogen or alkyl groups having from 1 to about 4 carbon atoms, and R¹¹ may be selected from alkyl, cycloalkyl, alkenyl, cycloalkenyl, alkaryl, aralkyl or aryl groups having from 1 to about 16 carbon atoms, any of which may be optionally substituted or interrupted as the case may be with silane, silicon, oxygen, halogen, carbonyl, hydroxyl, ester, carboxylic acid, urea, urethane, carbonate, amine, amide, sulfur, sulfonate, sulfone and the like.

Additional (meth)acrylate monomers suitable for use herein as the (meth)acrylate component in the present invention or as a component in making the reaction product include polyfunctional (meth)acrylate monomers, for example di-or trifunctional (meth)acrylates such as polyethylene glycol di(meth)acrylates, tetrahydrofuran (meth)acrylates and di(meth)acrylates, hydroxypropyl (meth)acrylate ("HPMA"), hexanediol di(meth)acrylate, trimethylol propane tri(meth)acrylates ("TMPTMA"), diethylene glycol dimethacrylate, triethylene glycol dimethacrylates ("TRIEGMA"), tetraethylene glycol di(meth)acrylates, dipropylene glycol di(meth)acrylates, di-(pentamethylene glycol) di(meth)acrylates, tetraethylene diglycol di(meth)acrylates, diglycerol tetra(meth)acrylates, tetramethylene di(meth)acrylates, ethylene di(meth)acrylates, neopentyl glycol di(meth)acrylates, and bisphenol-A mono and di(meth)acrylates, such as ethoxylated bisphenol-A (meth)acrylate ("EBIPMA"), and bisphenol-F mono and di(meth)acrylates, such as ethoxylated bisphenol-A (meth)acrylate.

Still other (meth)acrylate monomers that may be used herein include silicone (meth)acrylate moieties ("SiMA"), such as those taught by and claimed in U.S. Patent No. 5,605,999 (Chu).

Other suitable monomers include polyacrylate esters represented by the formula 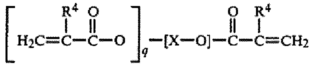 where here R⁴ is a radical selected from hydrogen, halogen or alkyl of from 1 to about 4 carbon atoms; q is an integer equal to at least 1, and preferably equal to from 1 to about 4; and X is an organic radical containing at least two carbon atoms and having a total bonding capacity of q plus 1. With regard to the upper limit for the number of carbon atoms in X, workable monomers exist at essentially any value. As a practical matter, however, a general upper limit is about 50 carbon atoms, preferably 30, and most preferably about 20.

For example, X can be an organic radical of the formula: 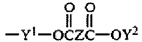 wherein here each of Y¹ and Y² is an organic radical, preferably a hydrocarbon group, containing at least 2 carbon atoms, and preferably from 2 to about 10 carbon atoms, and Z is an organic radical, preferably a hydrocarbon group, containing at least 1 carbon atom, and preferably from 2 to about 10 carbon atoms.

Other classes of useful monomers are the reaction products of di- or tri-alkylolamines (e.g., ethanolamines or propanolamines) with acrylic acids, such as are disclosed in French Patent No. 1,581,361.

Examples of useful acrylate ester oligomers include those having the following general formula: 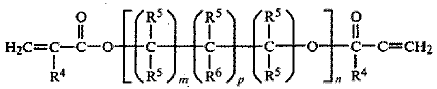 where here R⁵ represents a radical selected from hydrogen, lower alkyl of from 1 to about 4 carbon atoms, hydroxy alkyl of from 1 to about 4 carbon atoms, and 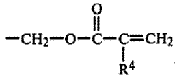 where here R⁴ is a radical selected from hydrogen, halogen, or lower alkyl of from 1 to about 4 carbon atoms; R⁶ is a radical selected from hydrogen, hydroxyl, or 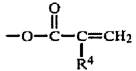 m is an integer equal to at least 1, e.g., from 1 to about 15 or higher, and preferably from 1 to about 8; n is an integer equal to at least 1, e.g., 1 to about 40 or more, and preferably between about 2 and about 10; and p is 0 or 1.

Typical examples of (meth)acrylate ester oligomers corresponding to the above general formula include di-, tri- and tetraethyleneglycol dimethacrylate; di(pentamethyleneglycol)dimethacrylate; tetraethyleneglycol diacrylate; tetraethyleneglycol di(chloroacrylate); diglycerol diacrylate; diglycerol tetramethacrylate; butyleneglycol dimethacrylate; neopentylglycol diacrylate; and trimethylolpropane triacrylate.

While di- and other polyacrylate esters, and particularly the polyacrylate esters described in the preceding paragraphs, can be desirable, monofunctional acrylate esters (esters containing one acrylate group) also may be used. When dealing with monofunctional acrylate esters, it is highly preferable to use an ester which has a relatively polar alcoholic moiety. Such materials are less volatile than low molecular weight alkyl esters and, more important, the polar group tends to provide intermolecular attraction during and after cure, thus producing more desirable cure properties, as well as a more durable sealant or adhesive. Desirably, the polar group is selected from labile hydrogen, heterocyclic ring, hydroxy, amino, cyano, and halo polar groups. Typical examples of compounds within this category are cyclohexylmethacrylate, tetrahydrofurfuryl methacrylate, hydroxyethyl acrylate, hydroxypropyl methacrylate, t-butylaminoethyl methacrylate, cyanoethylacrylate, and chloroethyl methacrylate.

Another useful class of monomers is prepared by the reaction of a monofunctionally substituted alkyl or aryl (meth)acrylate ester containing an active hydrogen atom on the functional substituent. This monofunctional, (meth)acrylate-terminated material is reacted with an organic polyisocyanate in suitable proportions so as to convert all of the isocyanate groups to urethane or ureido groups. The monofunctional alkyl and aryl acrylate esters are preferably the acrylates and methacrylates containing hydroxy or amino functional groups on the non-acrylate portion thereof. Acrylate esters suitable for use have the formula 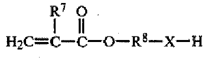 where here X is selected from --O-- or 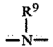 and R⁹ is selected from hydrogen or lower alkyl of 1 through 7 carbon atoms; R⁷ is selected from hydrogen, chlorine or methyl and ethyl radicals; and R⁸ is a divalent organic radical selected from lower alkylene of 1 through 8 carbon atoms, phenylene or naphthylene. These groups upon proper reaction with a polyisocyanate, yield a monomer of the following general formula: 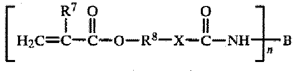 where n is an integer from 2 to about 6; B is a polyvalent organic radical selected from alkyl, alkenyl, cycloalkyl, cycloalkenyl, aryl, aralkyl, alkaryl or heterocyclic radicals both substituted and unsubstituted; and R⁷, R⁸ and X have the meanings given above in this paragraph.

Examples of suitable hydroxyl-functional (meth)acrylates include hydroxyethyl acrylate, hydroxypropyl acrylate, hydroxybutyl acrylate, hydroxyethyl methacrylate ("HEMA"), hydroxypropyl methacrylate ("HPMA"), hydroxybutyl methacrylate and mixtures thereof. Other examples of suitable hydroxy functional (meth)acrylates include 2-hydroxyethyl acrylate, 2-hydroxypropyl acrylate, 2-hydroxyethyl methacrylate ("HEMA"), pentaerythritol triacrylate ("PETA"), and 4-hydroxybutyl acrylate.

The hydroxy-functional (meth)acrylate can have a number average molecular weight of about 80 to about 1,000 grams/mole, or about 100 to about 800 grams/mole, or about 110 to about 600 grams/mole.

Of course, combinations of these (meth)acrylate monomers may also be used.

The (meth)acrylate component can comprise from about 10 to about 90 percent by weight of the composition, such as about 60 to about 90 percent by weight, based on the total weight of the composition.

As noted above, cure accelerators useful for anaerobic curable compositions, such as adhesives and sealants, are provided herein. The cure accelerators are embraced generally within structure I below 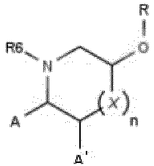 where here X is CH₂, O, S or C=O; R is hydrogen or (meth)acryl; R⁶ is hydrogen, halogen, amino, carboxyl, nitro, alkyl, alkenyl, alkynyl, hydroxyalkyl, hydroxyalkenyl, hydroxyalkynyl, or alkaryl; and A and A¹ are each individually selected from hydrogen or taken together create a ring structure of 5 to 12 total ring atoms, wherein the ring structure may be cycloaliphatic, cycloheteroaliphatic or aromatic or combinations thereof with or without substitution by one or more hydroxyl or (meth)acryl groups; R⁶ is hydrogen, halogen, amino, carboxyl, nitro, alkyl, alkenyl, alkynyl, hydroxyalkyl, hydroxyalkenyl, hydroxyalkynyl, or alkaryl; and n is 0 or 1, provided that when R is hydrogen, A and A' cannot both be hydrogen or taken together cannot be naphthyl. A particularly desirable example is shown below and is referred to as THQol:

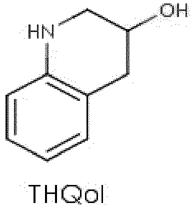

Cure accelerators embraced within structure I are shown in the chemical representation below: 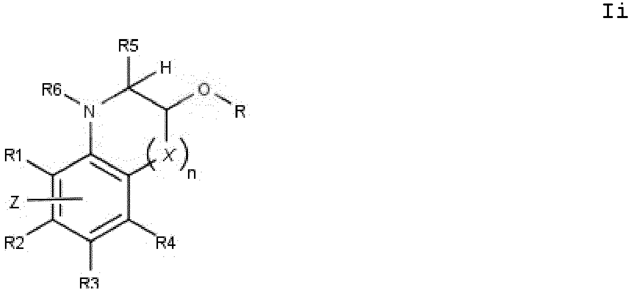 where here X is CH₂, O, S or C=O; R is hydrogen or (meth)acryl; R¹ - R⁶ are each individually selected from hydrogen, halogen, amino, carboxyl, nitro, alkyl, alkenyl, alkynyl, hydroxyalkyl, hydroxyalkenyl, hydroxyalkynyl, or alkaryl, or R¹ and R², R² and R³, or R³ and R⁴ taken together form a carbocyclic ring of 5 to 7 ring members, where one or more of the ring members may be O, S or NR¹⁰; R¹⁰ is hydrogen or CHR⁸R⁹, where R⁸ and R⁹ are each individually selected from hydrogen, halogen, amino, carboxyl, nitro, alkyl, alkenyl, alkynyl, hydroxyalkyl, hydroxyalkenyl, hydroxyalkynyl, or alkaryl; Z is optionally present but when present is halogen, amino, carboxyl, nitro, alkyl, alkenyl, alkynyl, hydroxyalkyl, hydroxyalkenyl, hydroxyalkynyl, or alkaryl; and n is 0 or 1.

A series of cure accelerators represented by the subgeneric chemical structures below are useful herein:

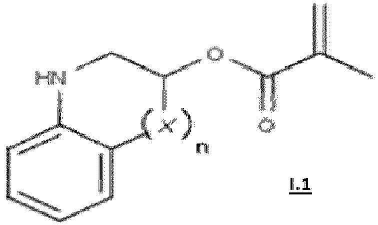

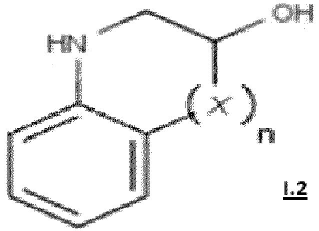

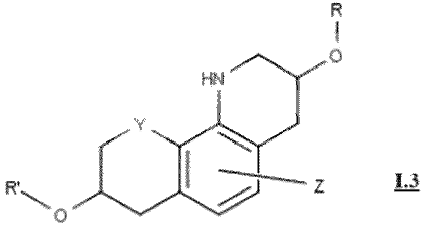

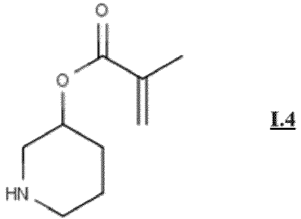

In structures **I.1** - **1.2** each of X and n are as defined above. In structure **I.3**, R and R', and Z are as defined above, and Y is NH.

Alternatively, generally an oligomeric or polymeric version of structure **I** may be used where R is (meth)acryl in structure **I** to form structure **IA** 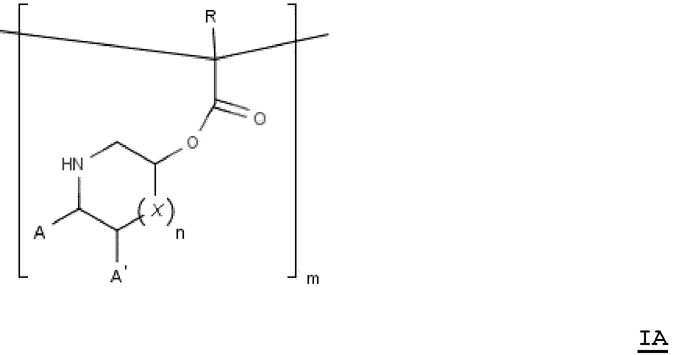 where here X, A and A', R, and n are as defined above; and m is 2 to 10,000, preferably 2 to 5000 and even more preferably 2 to 20.

Alternatively, also as noted above, an oligomeric or polymeric version of structure **I** may be used where R is (meth)acryl in structure Ii to form structure IiA below: 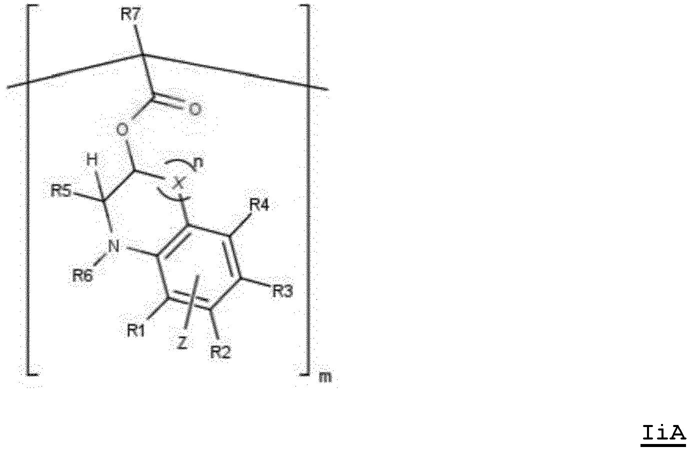 where here X, Z, R¹ - R⁶, and n are as defined above; R⁷ is alkyl, alkenyl, alkynyl, hydroxyalkyl, hydroxyalkenyl, hydroxyalkynyl, or alkaryl; and m is 2 to 10,000, preferably 2 to 5000 and even more preferably 2 to 20.

More specifically, in one embodiment the cure accelerator is shown as structure **II** below: 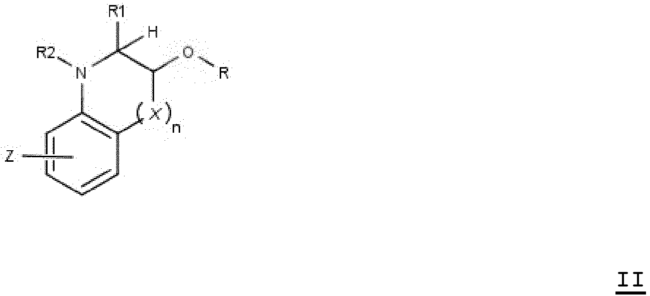 where R, R¹, R², X, Z and n are as defined above.

And an oligomeric or polymeric version of the cure accelerator of structure **II** is shown in structure **IIA** below: 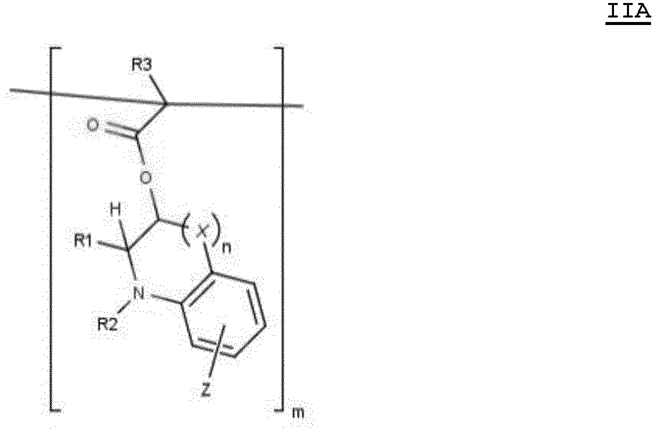 where here R¹, R², X, Z and n and m are as defined above; and R³ is defined as R⁷ in structure **IiA.**

More specifically, in another embodiment the cure accelerator is shown as structure **III** below: 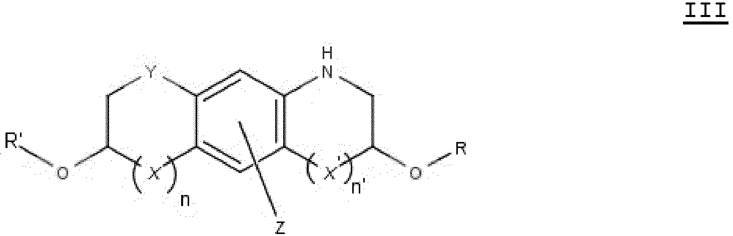 where here R and R' are independent of one another but are as defined above for R; X and X' are independent of one another but are as defined above for X; Y and Z are as defined above; and n and n' are independent of one another but are as defined above for n.

Within structure **III,** where X and X' are each CH₂ and n and n' are each 1 (and R, R', Y and Z are as above), structure **III.1** is shown below:

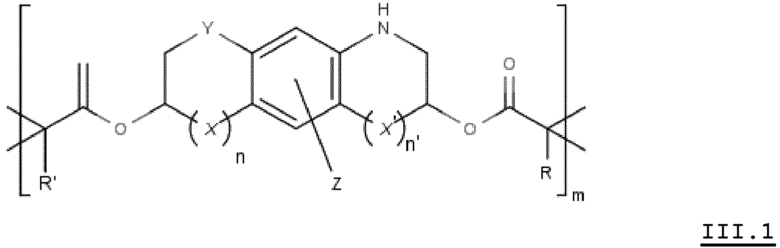

And an oligomeric or polymeric version of the cure accelerator of structure **III** is shown in structure IIIA below: 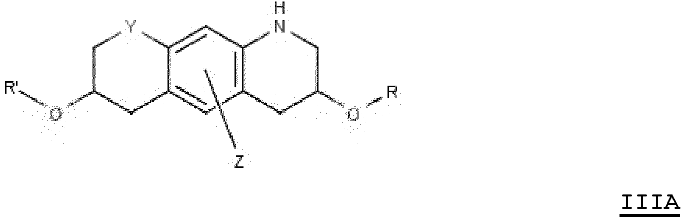 where here R and R' are independent of one another but are as defined above for R; X and X' are independent of one another but are as defined above for X; Y and Z are as defined above; n and n' are independent of one another but are as defined above for n; and m is as defined above.

And yet another oligomeric or polymeric version of the cure accelerator of structure IIIA is shown in structure **III.1A** below: 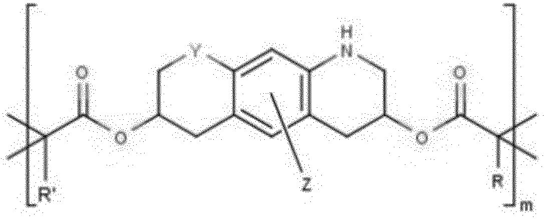 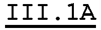 where here R and R' are independent of one another but are as defined above for R; and Y and Z are as defined above, and m is also as defined above.

And still yet another oligomeric or polymeric version of the cure accelerator of structure **III** is shown in structure **IIIB** below: 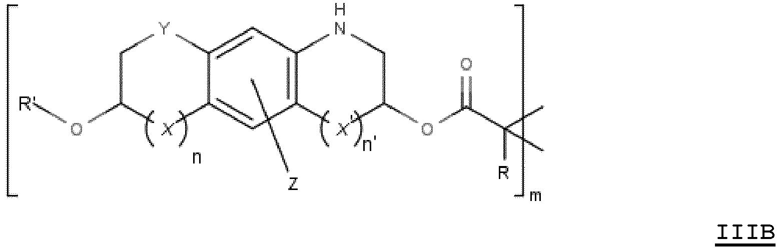 where here R and R' are independent of one another but are as defined above for R; X, X', Y and Z are as defined above; and n and n' are independent of one another but are as defined above for n; and m is as defined above.

And still yet another oligomeric or polymeric version of the cure accelerator of structure **III** is shown in structure **III.1B** below: 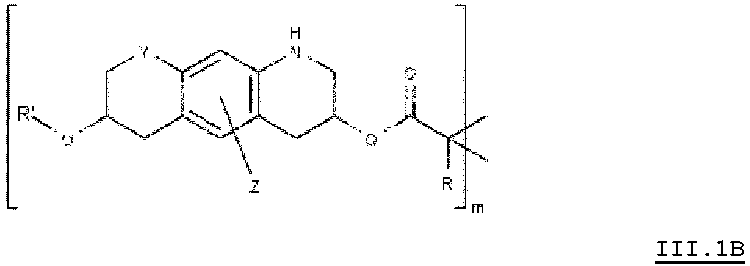 where here R and R' are independent of one another but are as defined above for R; Y and Z are as defined above; and n and n' are independent of one another but are as defined above for n; and m is as defined above.

More specifically, in still another embodiment the cure accelerator is shown as structure **IV** below: 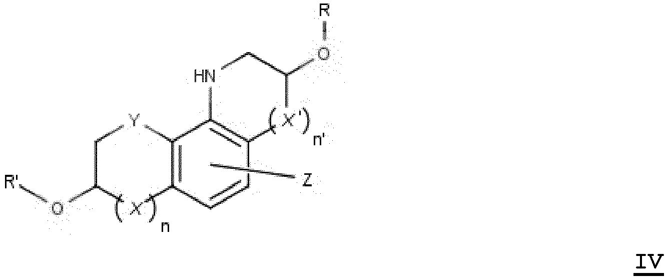 where here R and R' are independent of one another but are as defined above for R; X and X¹ are independent of one another but are as defined above; Y and Z are as defined above; and n and n' are independent of one another but are as defined above for n.

Within structure **IV,** where X and X' are each CH₂ and n and n' are each 1 (and R, R', Y and Z are as above), structure **IV.1** is shown below:

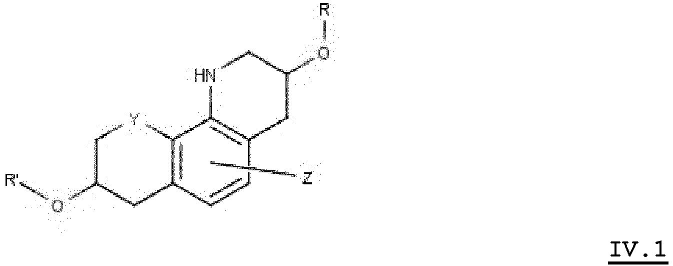

A particularly desirable cure accelerator embraced by structure **IV.1** is shown below as structure **IV.2** (or, ortho OHPQ diol) : 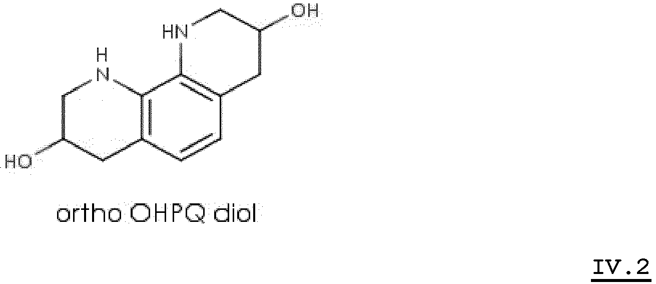 In structure **IV.2,** R and R' are each hydrogen, Y is NH and Z is not present from structure **IV.1.**

And an oligomeric or polymeric version of the cure accelerator of structure **IV** is shown in structure **IVA** below: 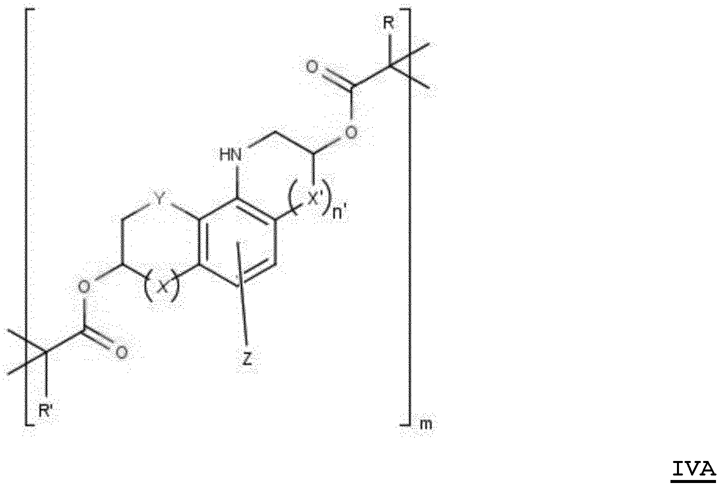 where here R and R' are independent of one another but are as defined above for R; X and X' are independent of one another but are as defined above for X; Y and Z are as defined above; and n and n' are independent of one another but are as defined above for n; and m is as defined above.

And another oligomeric or polymeric version of the cure accelerator of structure **IV** is shown in structure **IV.1A** below, where X and X' are each CH₂ and n and n' are each 1 (and R, R', Y and Z are as above): 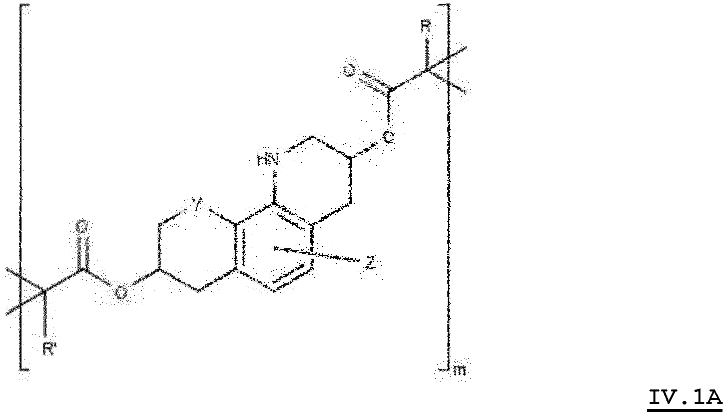 where here R and R' are independent of one another but are as defined above for R; and Y, Z and m are all as defined above.

And yet another oligomeric or polymeric version of the cure accelerator of structure **IV** is shown in structure **IVB** below: 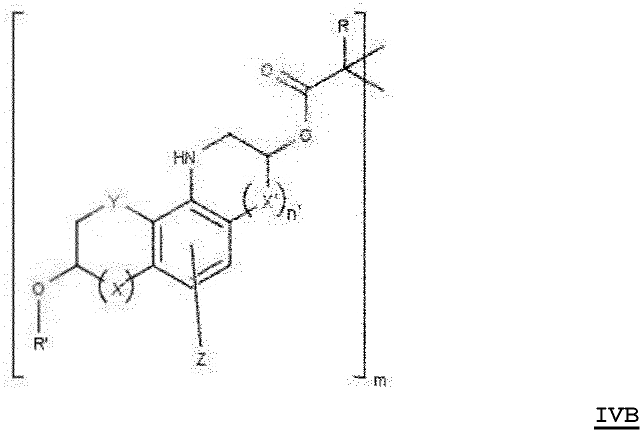 where here R and R' are independent of one another but are as defined above for R; X and X' are independent of one another but are as defined above for X; Y and Z are as defined above; and n and n' are independent of one another but are as defined above for n; and m is as defined above.

And still an oligomeric or polymeric version of the cure accelerator of structure **IV** is shown in structure **IV.1B** below: 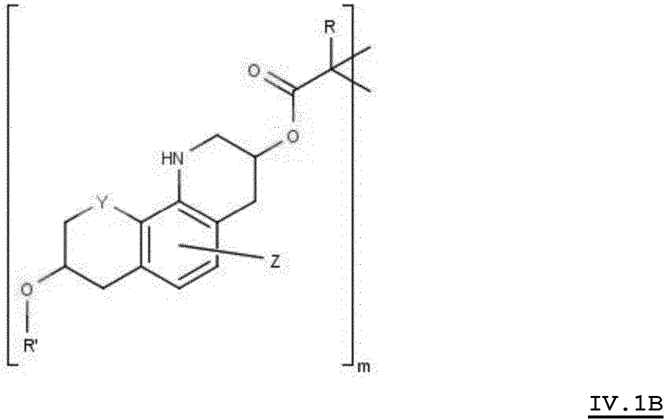 where here R and R' are independent of one another but are as defined above for R; Z is as defined above; n and n' are independent of one another but are as defined above for n; and m is as defined above.

More specifically, in still another embodiment the cure accelerator is shown as structure **V** below: 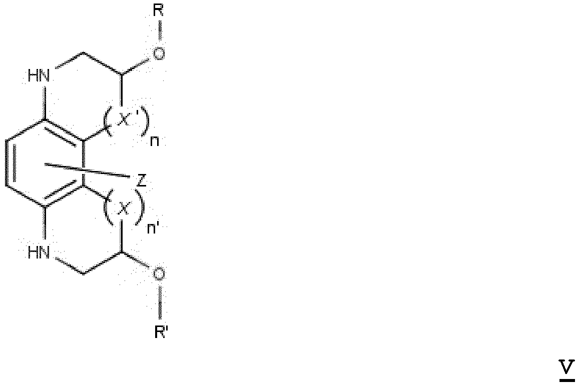 where here R and R' are independent of one another but are as defined above for R; X and X' are independent of one another but are as defined above for X; Z is as defined above; and n and n' are independent of one another but are as defined above for n.

Within structure **V**, where X and X' are each CH₂ and n and n' are each 1 (and R, R' and Z are as defined above), structure **V.1** is shown below:

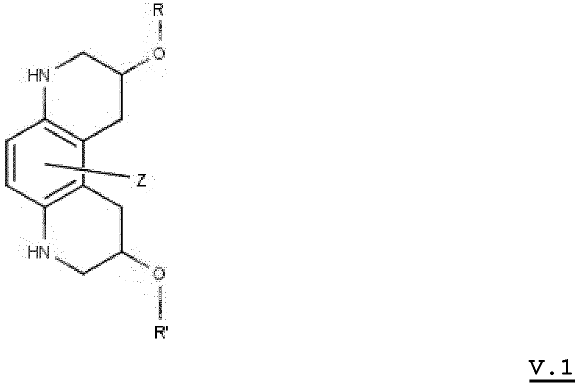

And an oligomeric or polymeric version of the cure accelerator of structure **V** is shown in structure **VA** below: 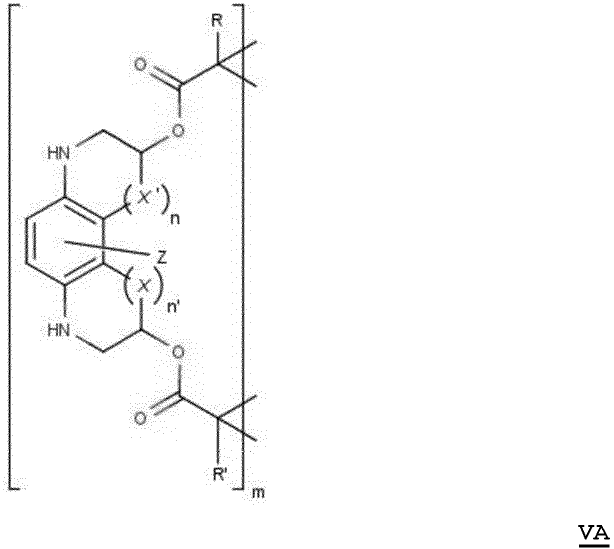 where here R and R' are independent of one another but are as defined above for R; X and X' are independent of one another but are as defined above for X; Z is as defined above; n and n' are independent of one another but are as defined above for n; and m is as defined above.

And another oligomeric or polymeric version of the cure accelerator of structure **V** is shown in structure **V.1A** below: 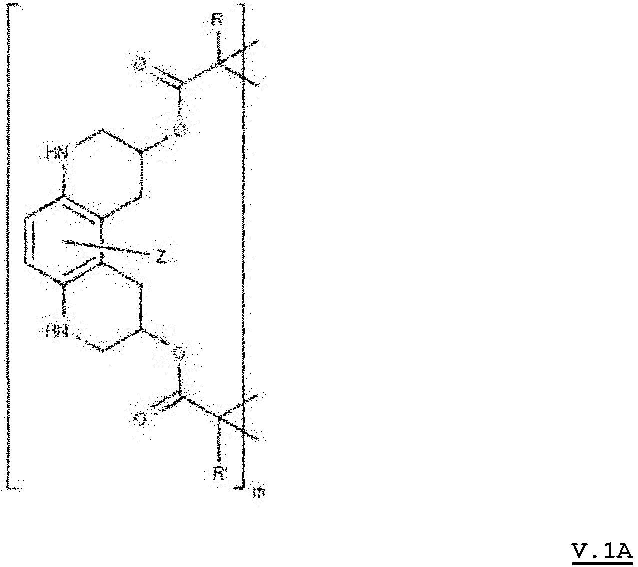 where here R and R' are independent of one another but are as defined above for R; and Z and m are each as defined above.

And another oligomeric or polymeric version of the cure accelerator of structure **V** is shown in structure **VB** below: 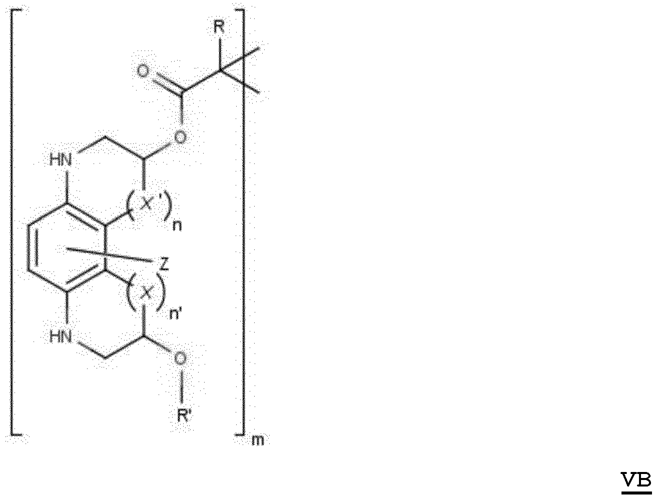 where here R and R' are independent of one another but are as defined above for R; X and X' are independent of one another but are as defined above for X; Z is as defined above; n and n' are independent of one another but are as defined above for n; and m is as defined above.

And an oligomeric or polymeric version of the cure accelerator of structure **V** is shown in structure **V.1B** below: 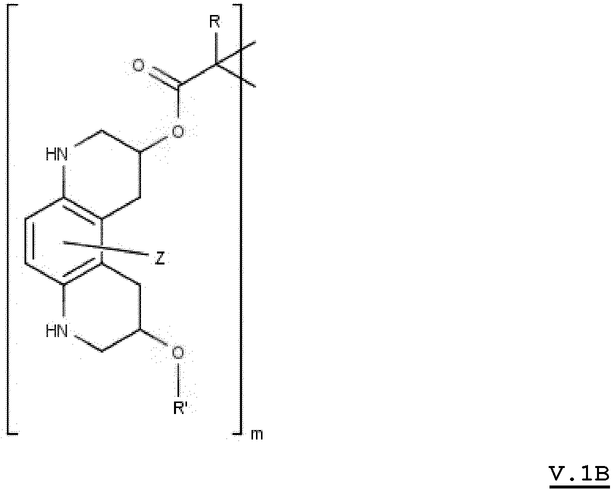 where here R and R' are independent of one another but are as defined above for R; X and X' are independent of one another but are as defined above for X; Z is as defined above; n and n' are independent of one another but are as defined above for n; and m is as defined above.

More specifically, in yet another embodiment the cure accelerator is shown as structure **VI** below: 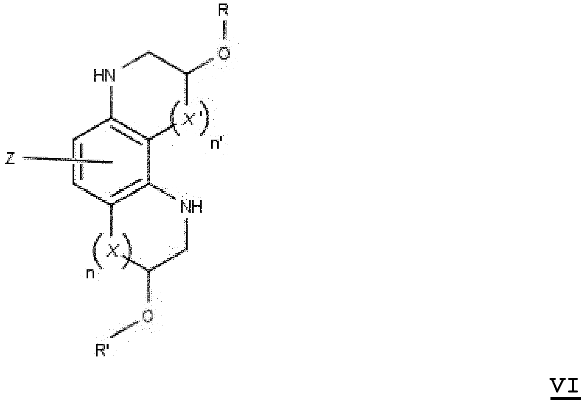 where here R and R' are independent of one another but are as defined above for R; X and X' are independent of one another but are as defined above for X; Z is as defined above; and n and n' are independent of one another but are as defined above for n.

Within structure **VI,** where X and X' are each CH₂ and n and n' are each 1 (and R, R', and Z are as defined above), structure **VI.1** is shown below:

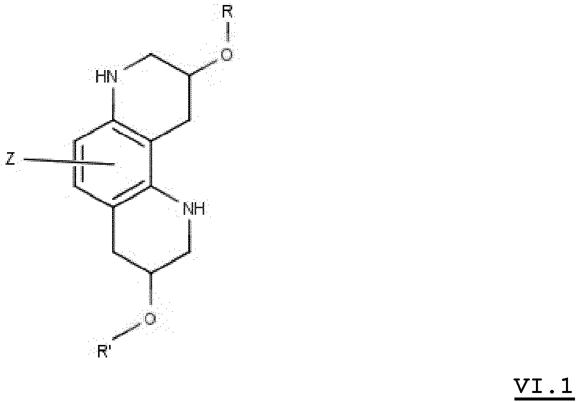

And an oligomeric or polymeric version of the cure accelerator of structure **VI** is shown in structure **VIA** below: 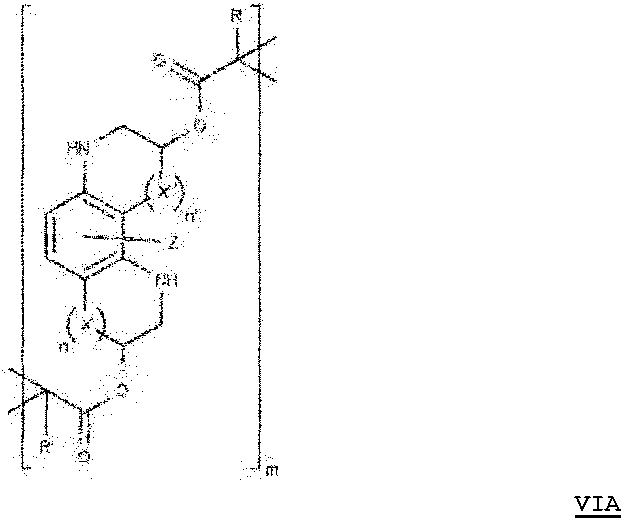 where here R and R' are independent of one another but are as defined above for R; X and X' are independent of one another but are as defined above for X; n and n' are independent of one another but are as defined above for n; and Z and m are as defined above.

And another oligomeric or polymeric version of the cure accelerator of structure **VI** is shown in structure **VI.1A** below: 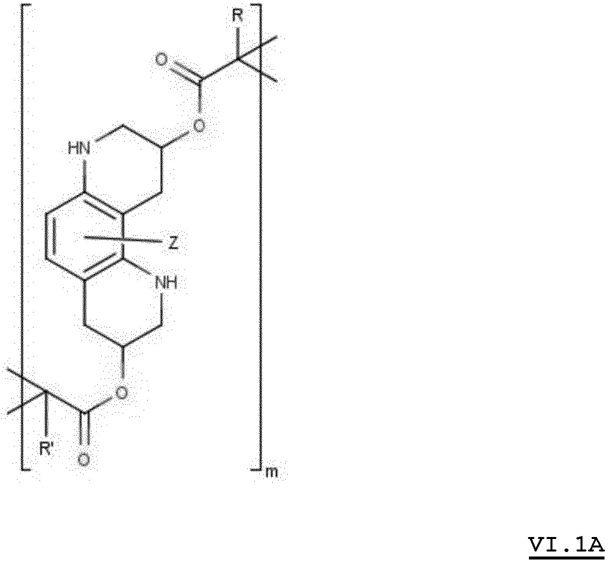 where here R and R' are independent of one another but are as defined above for R; and Z and m are as defined above.

And an oligomeric or polymeric version of the cure accelerator of structure **VI** is shown in structure **VIB** below: 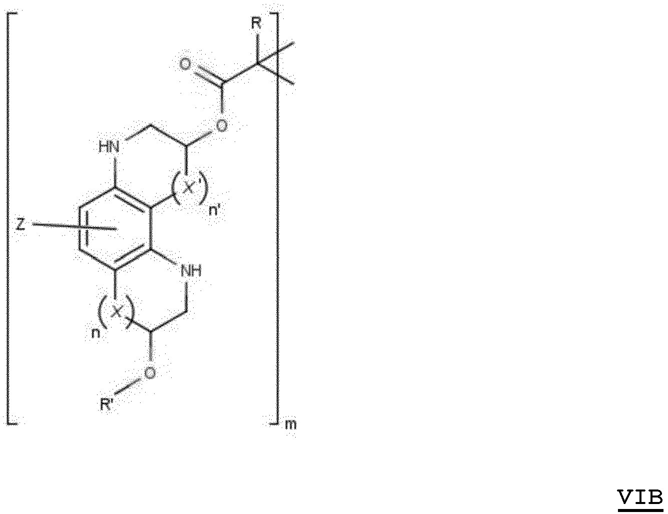 where here R and R' are independent of one another but are as defined above for R; and Z and m are as defined above.

And an oligomeric or polymeric version of the cure accelerator of structure **VI** is shown in structure **VI.1B** below: 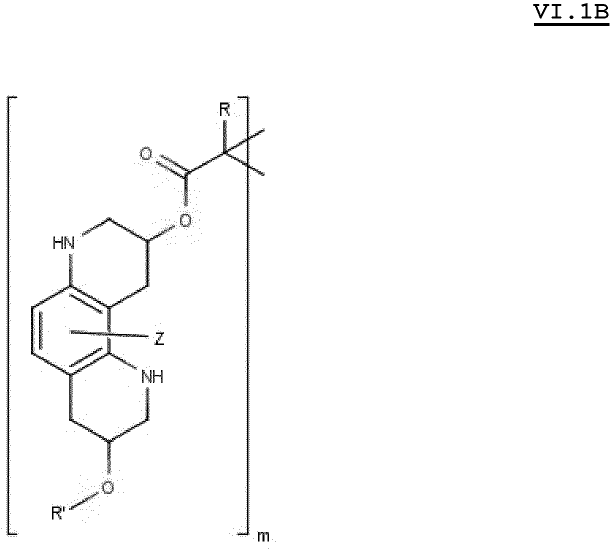 where here R and R' are independent of one another but are as defined above for R; X and X' are independent of one another but are as defined above for X; n and n' are independent of one another but are as defined above for n; and Z and m are as defined above.

More specifically, in yet another embodiment the cure accelerator is shown as structure VII below: 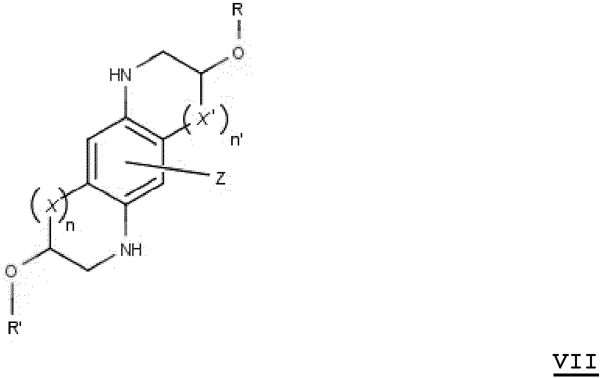 where here R and R' are independent of one another but are as defined above for R; X and X' are independent of one another but are as defined above for X; n and n' are independent of one another but are as defined above for n; and Z is as defined above.

Within structure **VII,** where X and X' are each CH₂ and n and n' are each 1 (and R, R', and Z are as defined above), structure **VII.1** is shown below:

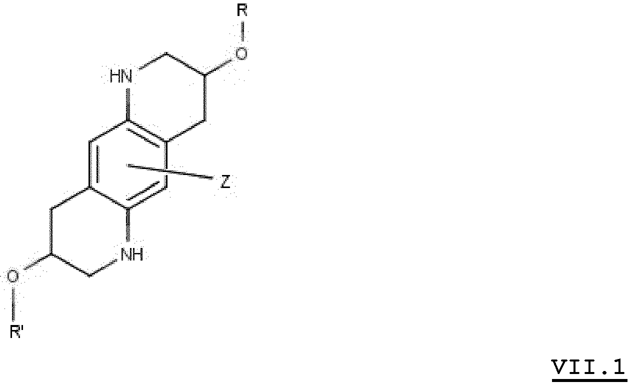

And an oligomeric or polymeric version of the cure accelerator of structure **VII** is shown in structure **VII.A** below: 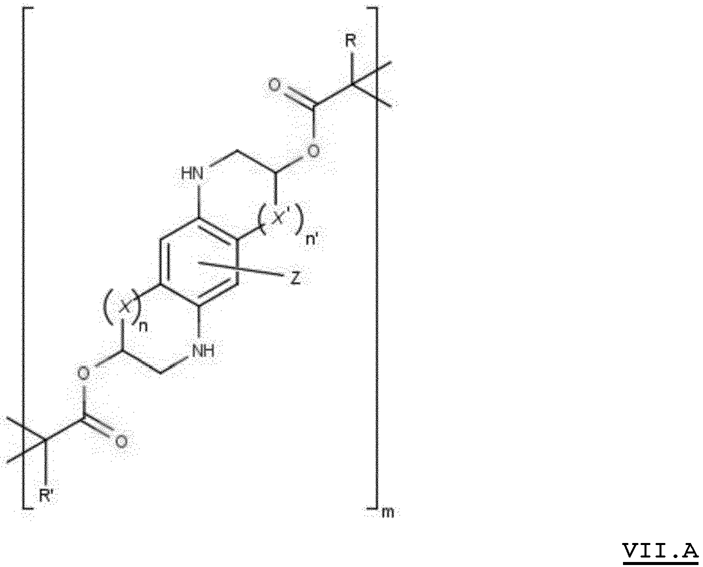 where here R and R' are independent of one another but are as defined above for R; X and X' are independent of one another but are as defined above for X; n and n' are independent of one another but are as defined above for n; and Z and m are as defined above.

And an oligomeric or polymeric version of the cure accelerator of structure **VII** is shown in structure **VII.1A** below: 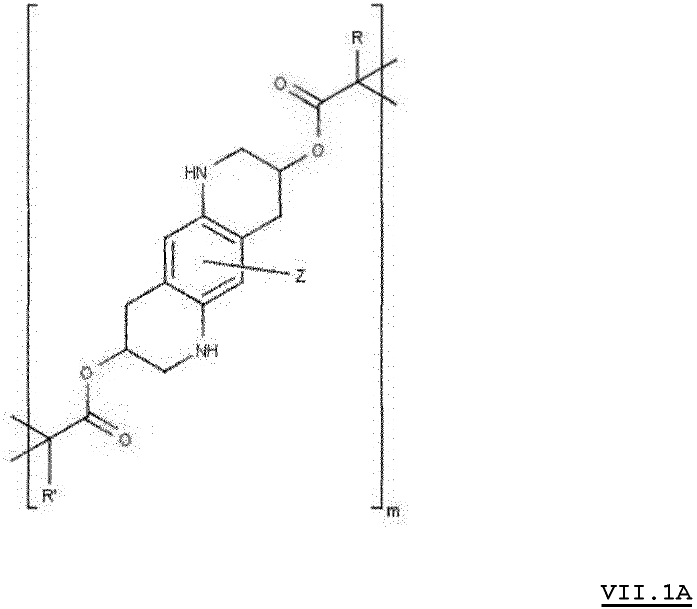 where here R and R' are independent of one another but are as defined above for R; and Z and m are as defined above.

And an oligomeric or polymeric version of the cure accelerator of structure **VII** is shown in structure **VIIB** below: 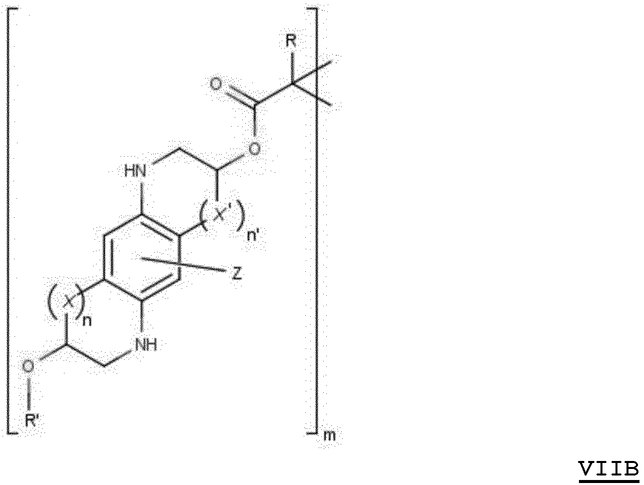 where here R and R' are independent of one another but are as defined above for R; X and X' are independent of one another but are as defined above for X; n and n' are independent of one another but are as defined above for n; and Z and m are as defined above.

And an oligomeric or polymeric version of the cure accelerator of structure **VII** is shown in structure **VII.1B** below: 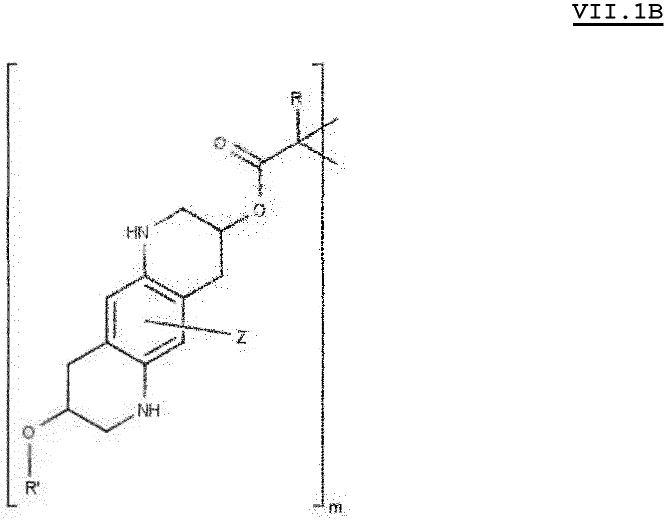 where here R and R' are independent of one another but are as defined above for R; and Z and m are as defined above.

More specifically, in yet another embodiment the cure accelerator is shown as structure **VIII** below: 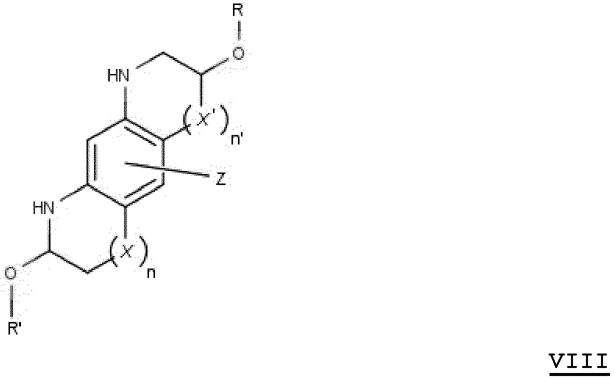 where here R and R' are independent of one another but are as defined above for R; X and X' are independent of one another but are as defined above for X; n and n' are independent of one another but are as defined above for n; and Z and m are as defined above.

Within structure **VIII,** where X and X' are each CH₂ and n and n' are each 1 (and R, R', Y and Z are as above), structure **VIII.1** is shown below:

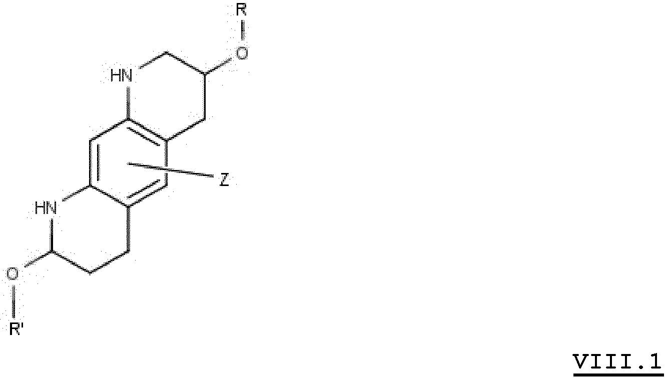

And an oligomeric or polymeric version of the cure accelerator of structure **VIII** is shown in structure **VIIIA** below: 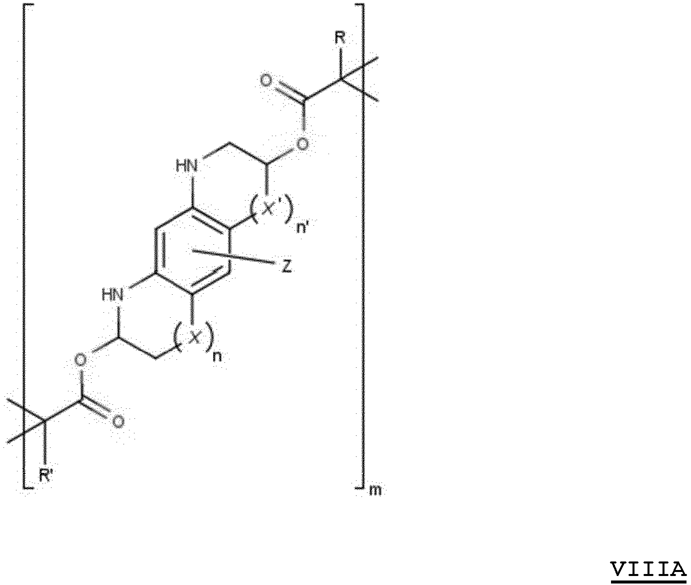 where here R and R' are independent of one another but are as defined above for R; X and X' are independent of one another but are as defined above for X; n and n' are independent of one another but are as defined above for n; and Z and m are as defined above.

And an oligomeric or polymeric version of the cure accelerator of structure **VIII** is shown in structure **VIII.1A** below: 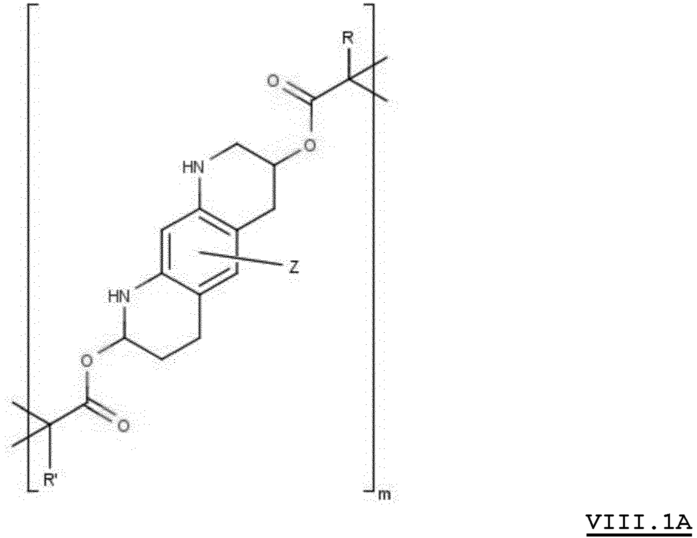 where here R and R' are independent of one another but are as defined above for R; and Z and m are as defined above.

And an oligomeric or polymeric version of the cure accelerator of structure **VIII** is shown in structure **VIIIB** below: 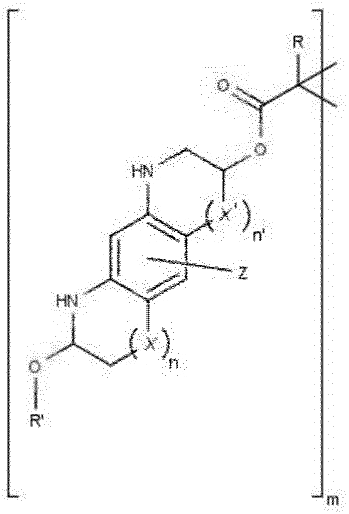 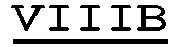 where here R and R' are independent of one another but are as defined above for R; X and X' are independent of one another but are as defined above for X; n and n' are independent of one another but are as defined above for n; and Z and m are as defined above.

And an oligomeric or polymeric version of the cure accelerator of structure **VIII** is shown in structure **VIII.1B** below: 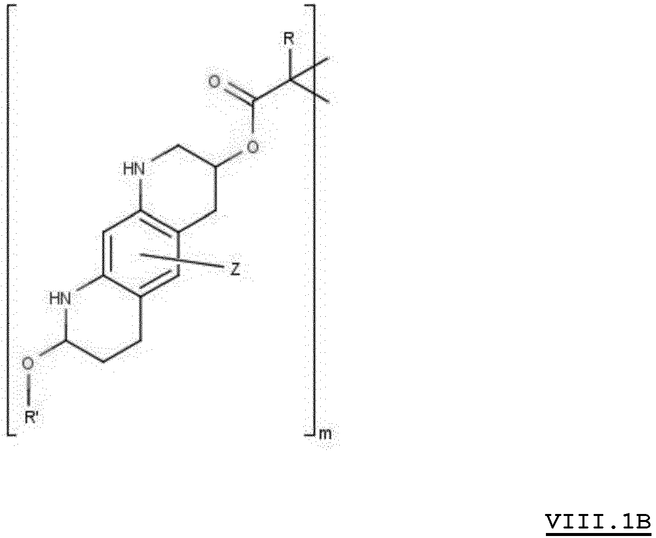 where here R and R' are independent of one another but are as defined above for R; and Z and m are as defined above.

The inventive cure accelerator may be present in amounts of about 0.005 to about 5 percent by weight, such as about 0.01 to about 2 percent by weight desirably about 0.01 to about 1.5 percent by weight, based on the total weight of the composition. The cure accelerators may be used in combination and/or with conventional accelerators (here called co-accelerators though ordinarily at lower levels than such conventional accelerators).

The anaerobic cure-inducing compositions ordinarily include free radical initiators, co-accelerators, and free radical inhibitors, as well as metal catalysts.

A number of well-known free radical initiators may be used including, without limitation, peroxide compounds such as hydroperoxides, like cumene hydroperoxide ("CHP"), para-menthane hydroperoxide, t-butyl hydroperoxide ("TBH"), diisopropylbenzene hydroperoxide and t-butyl perbenzoate. Other useful peroxides include benzoyl peroxide, dibenzoyl peroxide, 1,3-bis(t-butylperoxyisopropyl)benzene, diacetyl peroxide, butyl 4,4-bis(t-butylperoxy)valerate, p-chlorobenzoyl peroxide, t-butyl cumyl peroxide, t-butyl perbenzoate, di-t-butyl peroxide, dicumyl peroxide, 2,5-dimethyl-2,5-di-t-butylperoxyhexane, 2,5-dimethyl-2,5-di-t-butyl-peroxyhex-3-yne, 4-methyl-2,2-di-t-butylperoxypentane and combinations thereof.

Such peroxide compounds are typically employed in the present invention in the range of from about 0.1 to about 10 percent by weight, based on the total weight of the composition, with about 1 to about 5 percent by weight being desirable.

As noted, conventional accelerators of free radical polymerization may also be used in conjunction with the cure accelerators used in the present invention, though in amounts less than that used in the past. Such accelerators (referred to herein as co-accelerators) are typically of the hydrazine variety (e.g., APH), as disclosed in U.S. Patent Nos. 4,287,330 (Rich) and 4,321,349 (Rich). When APH is chosen as a co-accelerator for use herein, maleic acid would usually be added as well. One benefit of the present invention is that the inventive anaerobic cure accelerators render the use of such acids unnecessary in preparing anaerobic adhesive compositions.

Other co-accelerators may also be used in the compositions of the present invention including, without limitation, organic amides and imides, such as benzoic sulfimide (also known as saccharin) (see U.S. Patent No. 4,321,349). Of course, THQ as well could be used as a co-accelerator.

Stabilizers and inhibitors (such as phenols including hydroquinone and quinones) are useful to control and prevent premature peroxide decomposition and polymerization of the composition of the present invention, as well as chelating agents [such as the tetrasodium salt of ethylenediamine tetraacetic acid ("EDTA")] to trap trace amounts of metal contaminants therefrom. When used, chelating agents may ordinarily be present in the compositions in an amount from about 0.001 percent by weight to about 0.1 percent by weight, based on the total weight of the composition.

To the (meth)acrylate component, the anaerobic cure-inducing composition and the cure accelerator may be added components that have been included in traditional anaerobic adhesives to alter the physical properties of either the formulation or the reaction products thereof. For instance, one or more of maleimide components, thermal resistance-conferring co reactants, diluent components reactive at elevated temperature conditions, mono- or poly-hydroxyalkanes, polymeric plasticizers, and chelators (see U.S. Patent No. 6,391,993) may be included to modify the physical property and/or cure profile of the formulation and/or the strength or temperature resistance of the cured adhesive.

When used, the maleimide, co-reactant, reactive diluent, plasticizer, and/or mono- or poly-hydroxyalkanes, may be present in an amount within the range of about 1 percent to about 30 percent by weight, based on the total weight of the composition.

Other additives such as thickeners, non-reactive plasticizers, fillers, toughening agents (such as elastomers and rubbers) and other well-known additives may be used in the inventive compositions where the art-skilled believes it would be desirable to do so.

The present disclosure also provides methods of preparing and using the inventive anaerobic adhesive compositions, as well as reaction products of the compositions.

The inventive compositions may be prepared using conventional methods which are well known to those persons of skill in the art. For instance, the components of the inventive compositions may be mixed together in any convenient order consistent with the roles and functions the components are to perform in the compositions. Conventional mixing techniques using known apparatus may be employed.

The inventive compositions may be applied to a variety of substrates to perform with the desired benefits and advantages described herein. For instance, appropriate substrates may be constructed from steel, brass, copper, aluminum, zinc, and other metals and alloys, ceramics and thermosets. The compositions of this invention demonstrate particularly good bond strength on steel, brass, copper and zinc. An appropriate primer for anaerobic curable compositions may be applied to a surface of the chosen substrate to enhance cure rate. Or, the inventive anaerobic cure accelerators may be applied to the surface of a substrate as a primer. See e.g. U.S. Patent No. 5,811,473 (Ramos).

In addition, the disclosure provides a method of preparing an anaerobic curable composition, a step of which includes mixing together a (meth)acrylate component, an anaerobic cure inducing composition, and an anaerobic cure accelerator reaction product.

And the present disclosure provides a method of using an anaerobic cure accelerator compound, including (I) mixing the anaerobic cure accelerator compound in an anaerobic curable composition or (II) applying onto a surface of a substrate the anaerobic cure accelerator compound and applying thereover an anaerobic curable composition. Of course, the present disclosure also provides a bond formed between mated substrates with the inventive composition.

In view of the above description of the present invention, it is clear that a wide range of practical opportunities are provided. The following examples are for illustrative purposes only, and are not to be construed so as to limit in any way the teaching herein.

### EXAMPLES

The noted components in the amounts indicated in Tables 1A and 1B below were used to formulate a series of samples in which the accelerator was varied or left out of the sample altogether.

**Table 1A**

| **Component** | **Sample/Amt (wt%)** | | | | | | |
|---|---|---|---|---|---|---|---|
| | **A** | **B** | **C** | **D** | **E** | **F** | **G** |
| PEG 200 dimethacrylate | 70.22 | 70.22 | 70.22 | 70.22 | 70.22 | 70.22 | 70.22 |
| Chelator | 0.93 | 0.93 | 0.93 | 0.93 | 0.93 | 0.93 | 0.93 |
| Saccharin | 1.00 | 1.00 | 1.00 | 1.00 | 1.00 | 1.00 | 1.00 |
| Organic Filler | 26.75 | 26.75 | 26.75 | 26.75 | 26.75 | 26.75 | 26.75 |
| Initiator | 0.90 | 0.90 | 0.90 | 0.90 | 0.90 | 0.90 | 0.90 |
| Accelerator | 0.20 | 0.20 | 0.20 | 0.20 | 0.20 | 0.20 | -- |

The accelerator in Sample A, a control, is THBQol; in Sample B is ortho OHPQ diol; in Sample C is THQol; in Sample D is THBQMA; in Sample E piperidin-3-methacrylate ("PipMA"), shown below; in Sample F, another control, is piperidin-3-ol; and in Sample G, another control, there was no added accelerator.

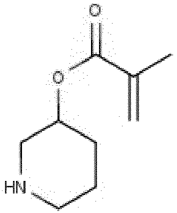

**Table 1B**

| **Component** | **Sample/Amt (wt%)** | | | | | | |
|---|---|---|---|---|---|---|---|
| | **H** | **I** | **J** | **K** | **L** | **M** | **N** |
| 2-hydroxyethyl methacrylate | 48.11 | 48.11 | 48.11 | 48.11 | 48.11 | 48.11 | 48.11 |
| Chelator | 0.13 | 0.13 | 0.13 | 0.13 | 0.13 | 0.13 | 0.13 |
| Polymethacrylate resin | 45.31 | 45.31 | 45.31 | 45.31 | 45.31 | 45.31 | 45.31 |
| Saccharin | 0.5 | 0.5 | 0.5 | 0.5 | 0.5 | 0.5 | 0.5 |
| Initiator | 3 | 3 | 3 | 3 | 3 | 3 | 3 |
| Acrylic Acid | 2.45 | 2.45 | 2.45 | 2.45 | 2.45 | 2.45 | 2.45 |
| Accelerator | 0.5 | 0.5 | 0.5 | 0.5 | 0.5 | 0.5 | -- |

The accelerator in Sample H, a control, is APH; in Sample I is ortho OHPQ diol; in Sample J is THQol; in Sample K is THBQMA; in Sample L piperidin-3-methacrylate ("PipMA"); in Sample M is piperidin-3-ol; and in Sample N, another control, there was no added accelerator.

In preparing the samples, the components were mixed using a stainless steel propeller-type mixer.

These samples were evaluated for breakaway torque and prevailing torque. The results are shown in Tables 2A and 2B, which follow below.

Breakaway torque is the initial torque required to decrease or eliminate the axial load in a non-seated assembly. Prevailing torque, after initial breakage of the bond, is measured at any point during 360° rotation of the nut. Prevailing torque is normally determined at 180° rotation of the nut.

As substrates, M10 mild steel bolts and black oxide nuts were degreased, adhesive was applied to the bolt, and the nut was screwed onto the bolt. Five nut and bolt specimens were assembled for each adhesive formulation tested. For the breakaway/prevailing torque evaluations, the specimens were maintained at ambient temperature (25°C) and 45-50% relative humidity, for 24 hours after assembly. The breakaway and prevailing torque strengths (N-m) were then recorded for five specimens of each sample. The torque strengths were measured using a calibrated automatic torque analyzer. The data for the breakaway (or break) and prevailing (or prevail) torque evaluations is set forth in Tables 2A and 2B below.

**Table 2A**

| Sample | Break (Nm) | Prevail (Nm) |
|---|---|---|
| A | 29.6 | 27.8 |
| B | 19.9 | 17.9 |
| C | 24.6 | 23.2 |
| D | 31.7 | 34.3 |
| E | 11.8 | 10.6 |
| F | 1.3 | 0.3 |
| G | 0 | 0 |

**Table 2B**

| Sample | Break (Nm) | Prevail (Nm) |
|---|---|---|
| H | 29.4 | 29.4 |
| I | 48.8 | 34.5 |
| J | 35.9 | 24.3 |
| K | 52.5 | 34.8 |
| L | 31.8 | 18.4 |
| M | 4.2 | 0.9 |
| N | 0 | 0 |

The data captured in Tables 2A and 2B indicates that Samples B-E and I-L exhibited generally similar breakaway/prevailing torque properties at room temperature compared to the accelerator-containing controls (Samples A and H) when applied and cured on the substrates.

## Claims

1. An anaerobic curable composition comprising:
(a) a (meth)acrylate component;
(b) an anaerobic cure-inducing composition; and,
(c) a cure accelerator embraced by structure **I** below: 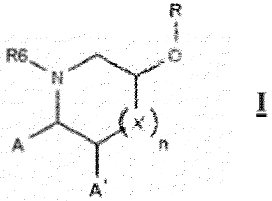
wherein:
X is CH₂, O, S or C=O;
R is hydrogen or (meth)acryl;
R⁶ is hydrogen, halogen, amino, carboxyl, nitro, alkyl, alkenyl, alkynyl, hydroxyalkyl, hydroxyalkenyl, hydroxyalkynyl, or alkaryl;
A and A¹ are each individually selected from hydrogen or taken together create a ring structure of 5 to 12 total ring atoms, wherein the ring structure may be cycloaliphatic, cycloheteroaliphatic or aromatic or combinations thereof with or without substitution by one or more hydroxyl or (meth)acryl groups; and,
n is 0 or 1,
provided that when R is hydrogen, A and A' cannot both be hydrogen or taken together cannot be naphthyl.

2. The composition of Claim 1, wherein the cure accelerator is embraced by structure Ii below: 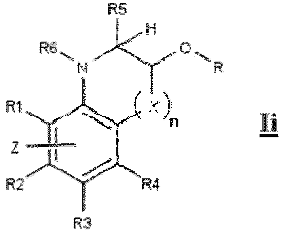 wherein:
X is CH₂, O, S or C=O;
R is hydrogen or (meth)acryl;
52
R¹ - R⁶ are each individually selected from hydrogen, halogen, amino, carboxyl, nitro, alkyl, alkenyl, alkynyl, hydroxyalkyl, hydroxyalkenyl, hydroxyalkynyl, or alkaryl, or R¹ and R², R² and R³, or R³ and R⁴ taken together form a carbocyclic ring of 5 to 7 ring members, where one or more of the ring members may be O, S or NR¹⁰;
R¹⁰ is hydrogen or CHR⁸R⁹ , where R⁸ and R⁹ are each individually selected from hydrogen, halogen, amino, carboxyl, nitro, alkyl, alkenyl, alkynyl, hydroxyalkyl, hydroxyalkenyl, hydroxyalkynyl, or alkaryl;
Z is optionally present but when present is halogen, amino, carboxyl, nitro, alkyl, alkenyl, alkynyl, hydroxyalkyl, hydroxyalkenyl, hydroxyalkynyl, or alkaryl; and,
n is 0 or 1.

3. The composition according to Claim 1, wherein the cure accelerator is selected from the group consisting of 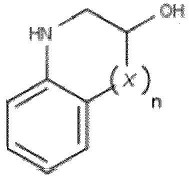 and, 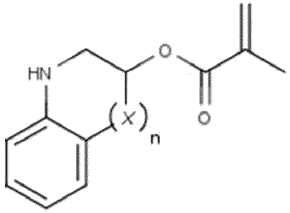 wherein: X and n are as defined above.

4. The composition according to Claim 1, wherein the cure accelerator is:

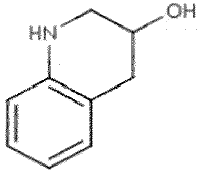

5. The composition according to Claim 2 wherein the cure accelerator is: 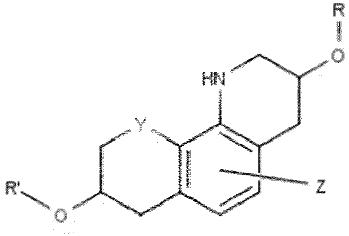 wherein:
R is hydrogen or (meth)acryl;
R' is hydrogen or (meth)acryl;
Z is optionally present but when present is halogen, amino, carboxyl, nitro, alkyl, alkenyl, alkynyl, hydroxyalkyl, hydroxyalkenyl, hydroxyalkynyl, or alkaryl; and,
Y is NH.

6. The composition according to Claim 1, wherein the cure accelerator is:

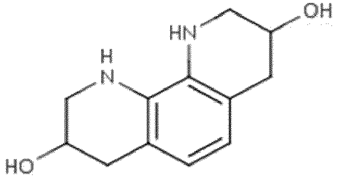

7. The composition according to Claim 1, wherein the cure accelerator is:

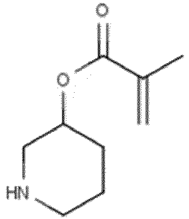

## Patentansprüche

1. Anaerobe härtbare Zusammensetzung, umfassend:
(a) eine (Meth)acrylatkomponente;
(b) eine anaerobe härtungsinduzierende Zusammensetzung; und
(c) ein von untenstehender Struktur **I** umschlossener Härtungsbeschleuniger: 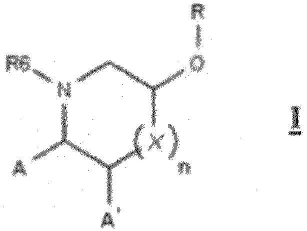
wobei: X CH₂, O, S oder C=O ist;
R Wasserstoff oder (Meth)acryl ist;
R⁶ Wasserstoff, Halogen, Amino, Carboxyl, Nitro, Alkyl, Alkenyl, Alkinyl, Hydroxyalkyl, Hydroxyalkenyl, Hydroxyalkinyl oder Alkaryl ist;
A und A¹ jeweils einzeln aus Wasserstoff ausgewählt sind oder zusammen genommen eine Ringstruktur mit insgesamt 5 bis 12 Ringatomen bilden, wobei die Ringstruktur cycloaliphatisch, cycloheteroaliphatisch oder aromatisch oder Kombinationen davon mit oder ohne Substitution durch eine oder mehrere Hydroxyl- oder (Meth)acrylgruppen sein kann; und
n 0 oder 1 ist,
vorausgesetzt, dass, wenn R Wasserstoff ist, A und A' nicht beide Wasserstoff sein können oder zusammen genommen nicht Naphthyl sein können.

2. Zusammensetzung nach Anspruch 1, wobei der Härtungsbeschleuniger von untenstehender Struktur **Ii** umschlossen ist: 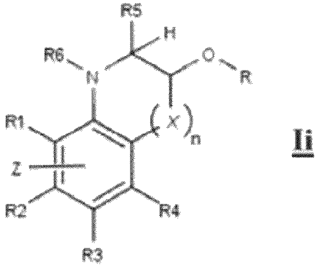
wobei: X CH₂, O, S oder C=O ist;
R Wasserstoff oder (Meth)acryl ist;
R¹ - R⁶ jeweils einzeln ausgewählt sind aus Wasserstoff, Halogen, Amino, Carboxyl, Nitro, Alkyl, Alkenyl, Alkinyl, Hydroxyalkyl, Hydroxyalkenyl, Hydroxyalkinyl oder Alkaryl, oder R¹ und R², R² und R³ oder R³ und R⁴ zusammen genommen einen carbocyclischen Ring mit 5 bis 7 Ringgliedern ausbilden, wobei ein oder mehrere der Ringglieder O, S oder NR¹⁰ sein können;
R¹⁰ Wasserstoff oder CH⁸R⁹ ist, wobei R⁸ und R⁹ jeweils einzeln ausgewählt sind aus Wasserstoff, Halogen, Amino, Carboxyl, Nitro, Alkyl, Alkenyl, Alkinyl, Hydroxyalkyl, Hydroxyalkenyl, Hydroxyalkinyl oder Alkaryl;
Z optional vorhanden ist, aber wenn vorhanden Halogen, Amino, Carboxyl, Nitro, Alkyl, Alkenyl, Alkinyl, Hydroxyalkyl, Hydroxyalkenyl, Hydroxyalkinyl oder Alkaryl ist; und
n 0 oder 1 ist.

3. Zusammensetzung nach Anspruch 1, wobei der Härtungsbeschleuniger aus der Gruppe ausgewählt ist, bestehend aus: 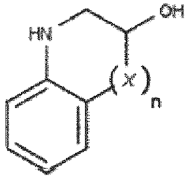 und, 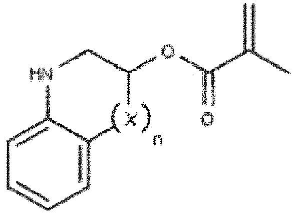 wobei: X und n wie obenstehend definiert sind.

4. Zusammensetzung nach Anspruch 1, wobei der Härtungsbeschleuniger ist:

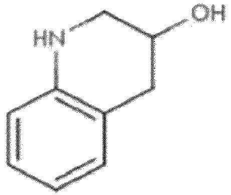

5. Zusammensetzung nach Anspruch 2, wobei der Härtungsbeschleuniger ist: 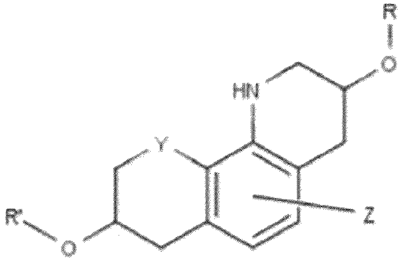
wobei: R Wasserstoff oder (Meth)acryl ist;
R' Wasserstoff oder (Meth)acryl ist;
Z optional vorhanden ist, aber wenn vorhanden Halogen, Amino, Carboxyl, Nitro, Alkyl, Alkenyl, Alkinyl, Hydroxyalkyl, Hydroxyalkenyl, Hydroxyalkinyl oder Alkaryl ist; und Y NH ist.

6. Zusammensetzung nach Anspruch 1, wobei der Härtungsbeschleuniger ist:

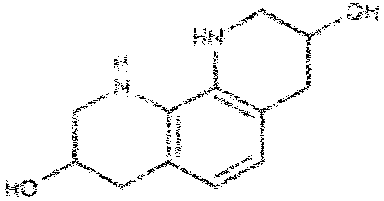

7. Zusammensetzung nach Anspruch 1, wobei der Härtungsbeschleuniger ist:

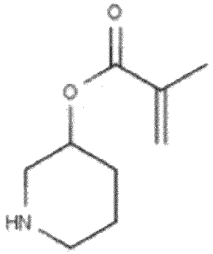

## Revendications

1. Composition durcissable par voie anaérobie comprenant :
(a) un composant (méth)acrylate ;
(b) une composition anaérobie inductrice de durcissement ; et,
(c) un accélérateur de cure englobé dans la structure **I** ci-dessous : 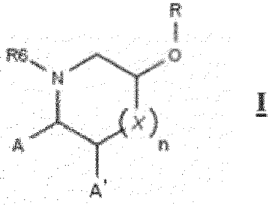
dans laquelle : X est CH₂, O, S ou C=O ;
R est un hydrogène ou un (méth)acrylique ;
R⁶ est un hydrogène, un halogène, un amino, un carboxyle, un nitro, un alkyle, un alcényle, un alcynyle, un hydroxyalkyle, un hydroxyalcényle, un hydroxyalcynyle ou un alcaryle ;
A et A¹ sont chacun choisis individuellement parmi l'hydrogène ou, pris ensemble, créent une structure cyclique de 5 à 12 atomes de cycle au total, dans laquelle la structure cyclique peut être cycloaliphatique, cyclohétéroaliphatique ou aromatique ou des combinaisons de celles-ci, avec ou sans substitution par un ou plusieurs groupes hydroxyle ou (méth)acrylique ; et,
n est 0 ou 1,
à condition que, lorsque R est un hydrogène, A et A' ne soient pas tous deux un hydrogène ou, pris ensemble, ne soient pas un naphtyle.

2. Composition selon la revendication 1, dans laquelle l'accélérateur de durcissement est englobé par la structure **Ii** ci-dessous : 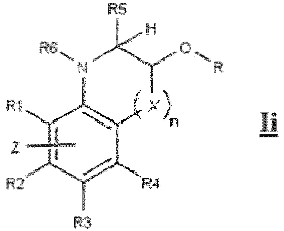
dans laquelle : X est CH₂, O, S ou C=O ;
R est un hydrogène ou un (méth)acrylique ;
R¹ - R⁶ sont chacun individuellement choisis parmi l'hydrogène, l'halogène, l'amino, le carboxyle, le nitro, l'alkyle, l'alcényle, l'alcynyle, l'hydroxyalkyle, l'hydroxyalcényle, l'hydroxyalcynyle ou l'alcaryle, ou R¹ et R², R² et R³, ou R³ et R⁴ pris ensemble forment un cycle carbocyclique de 5 à 7 éléments de cycle, où un ou plusieurs des éléments de cycle peuvent être O, S ou NR¹⁰ ;
R¹⁰ est l'hydrogène ou CHR⁸R⁹, où R⁸ et R⁹ sont choisis individuellement parmi l'hydrogène, l'halogène, l'amino, le carboxyle, le nitro, l'alkyle, l'alcényle, l'alcynyle, l'hydroxyalkyle, l'hydroxyalcényle, l'hydroxyalcynyle ou l'alcaryle ;
Z est éventuellement présent, mais lorsqu'il est présent, il s'agit d'un halogène, d'un amino, d'un carboxyle, d'un nitro, d'un alkyle, d'un alcényle, d'un alcynyle, d'un hydroxyalkyle, d'un hydroxyalcényle, d'un hydroxyalcynyle ou d'un alcaryle ; et,
n est 0 ou 1.

3. Composition selon la revendication 1, dans laquelle l'accélérateur de durcissement est choisi dans le groupe constitué de 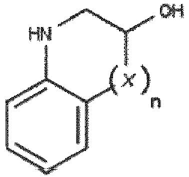 et, 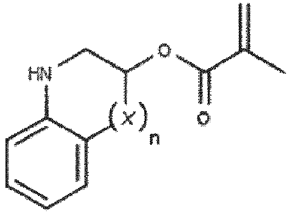 dans laquelle : X et n sont définis ci-dessus.

4. Composition selon la revendication 1, dans laquelle l'accélérateur de durcissement est :

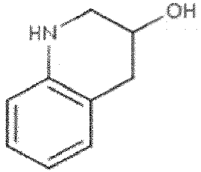

5. Composition selon la revendication 2, dans laquelle l'accélérateur de durcissement est : 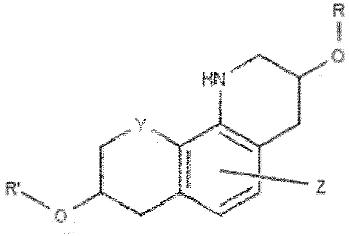
dans laquelle : R est un hydrogène ou un (méth)acrylique ;
R' est un hydrogène ou un (méth)acrylique ;
Z est éventuellement présent, mais lorsqu'il est présent, il s'agit d'un halogène, d'un amino, d'un carboxyle, d'un nitro, d'un alkyle, d'un alcényle, d'un alcynyle, d'un hydroxyalkyle, d'un hydroxyalcényle, d'un hydroxyalcynyle ou d'un alcaryle ; et,
Y est NH.

6. Composition selon la revendication 1, dans laquelle l'accélérateur de durcissement est :

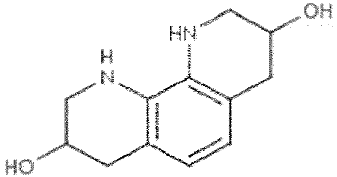

7. Composition selon la revendication 1, dans laquelle l'accélérateur de durcissement est :
